# EUROPEAN PATENT APPLICATION

(11) **EP 4 641 433 A1**
(43) Date of publication of application: **29.10.2025**
(21) Application number: 23907618.5
(22) Date of filing: 15.12.2023
(51) Int. Cl.: G06F 30/23, G06F 30/15, G06F 119/02, G06F 111/10

(54) **COLLISION MODEL ANALYSIS METHOD**

(30) Priority: 21.12.2022 KR 20220181117
(71) Applicant: POSCO Co., Ltd, Pohang-si, Gyeongsangbuk-do 37859 (KR)
(72) Inventor: LEE, Gyu-Min, Incheon 21985 (KR); LEE, Hong-Woo, Incheon 21985 (KR); KIM, Hwi-Geon, Incheon 21985 (KR)
(74) Representative: Meissner Bolte Partnerschaft mbB
(86) International application number: PCT/KR2023/020745
(87) International publication number: WO 2024/136332

(57) **Abstract**

The present invention relates to a method for analyzing a vehicle collision by using a simplified model for analyzing a vehicle collision model on the basis of a finite element analysis using software, the method comprising the steps of: a first area setting step for defining a first area, which is an area deformed by a collision, in a first input unit and inputting the modeling of the first area into a storage unit and storing same therein; a second area setting step for defining a second area, which is an area relatively less deformed by a collision, in a second input unit, designating the second area as a rigid body element, and inputting simplified information about the rigid element into the storage unit and storing same therein; a calibration step for designating, in a calibration unit, a first beam element at the boundary of the first area and the second area and storing the first beam element, one end thereof in connection with the modeling and the other end thereof in connection with the rigid element; and an analysis step for automatically calculating the collision in a computing unit by means of an algorithm of finite element analysis using the values stored in the storage unit and the calibration unit.

## Description

### Technical Field

The present disclosure relates to a method for analyzing a vehicle collision by using a simplified model for analyzing a vehicle collision model on the basis of finite element analysis using software.

### Background Art

To ensure the reliability of parts and vehicles for vehicle collisions, a collision test is conducted using the frontal collision evaluation method of the vehicle.

The full frontal collision test (Full Rigid Barrier, FRB) is a test regulation that crashes a vehicle into a completely fixed wall at 48 km/h or 56 km/h.

The partial frontal collision test (Offset Deformable Barrier) is a test in which a portion (40%) of the front of the vehicle is crashed into a fixed wall at 64 km/h. If the full frontal collision test is performed with two front side members, this test is performed with one part.

The small overlap front collision test is a test in which a very small portion (25%) of the front of the vehicle crashes into a fixed wall at 64 km/h. This is a method to verify the reliability of a vehicle in a collision by mostly deflecting the front side member and usually inserting a structure connected to the front side member to counteract or deflect the impact in the event of a collision and transmit minimal impact to the occupants.

The above collision tests are applied as major evaluation criteria during vehicle development, and in the vehicle development stage of automobile companies, to develop vehicles that meet these evaluation criteria, whether the criteria are met is determined through a collision analysis based on the finite element method for the entire vehicle.

Through this collision analysis, in addition to the performance of the entire vehicle, the collision performance of the components that make up the vehicle is evaluated, and the direction of improvement and the degree of improvement are determined.

Some design techniques are being developed through the composition of a simplified analysis model rather than a collision analysis model for the entire vehicle, but the results are inferior to the results of the collision analysis for the entire vehicle, and there are limitations in application thereof to actual component development. In addition, collision tests have become a very important factor for the safety of batteries in electric vehicles. Therefore, parts companies also need collision analysis methods that may perform accurate crash tests and take less time.

(Patent Document 1) Korean Patent Publication No. 10-2018-0009904 (Published on January 30, 2018)

### Summary of Invention

### Technical Problem

An aspect of the present disclosure is to resolve the above problems and to provide a method for analyzing a vehicle collision model, in which a collision test may be simulated using a simplified model rather than a model of the entire vehicle.

### Solution to Problem

The present disclosure provides a method for analyzing a vehicle collision model formed as follows to obtain the above object.

According to an aspect of the present disclosure, a method for analyzing a vehicle collision model based on finite element analysis using software includes a first area setting operation of defining a first area, an area in which deformation occurs due to a collision, in a first input unit, and receiving a modeling of the first area and storing the modeling in a storage unit, a second area setting operation of defining a second area, an area in which deformation occurs relatively less due to a collision, in a second input unit, designating the second area as a rigid body element, receiving simplification information about the rigid body element, and storing the simplification information in the storage unit, a calibration operation of designating a first beam element at a boundary between the first area and the second area in a calibration unit, and connecting one end of the first beam element to the modeling and the other end thereof to the rigid body element and storing, and an analysis operation of automatically calculating, by a computing unit, the collision using a finite element analysis algorithm with values stored in the storage unit and the calibration unit.

The calibration operation may include a calibration input operation of receiving a first cross-section of a vehicle component designated as the first beam element and located at the boundary, in a width direction of a vehicle, a calibration calculation operation of automatically calculating a first moment of inertia, a moment of inertia of the first cross-section, and a calibration storage operation of connecting one end of the first beam element to the first cross-section of the modeling and storing the first moment of inertia as information of the first beam element.

The first cross-section may be a cross-section of a front pillar (A-pillar), a rocker, and a longitudinal floor.

The method for analyzing a vehicle collision model may further include a battery frame setting operation located between the second area setting operation and the calculation operation, the battery frame setting operation setting a battery frame surrounding a battery area of the vehicle as a second beam element in the calibration unit, and connecting one end of the second beam element to the modeling and the other end thereof to the rigid body element and storing. The battery frame setting operation may include a battery frame input operation of receiving a second cross-section, a cross section in the width direction, of a side frame forming a side surface of the battery frame and a battery longitudinal frame disposed in a longitudinal direction of the vehicle in a lower portion of the battery area, a battery frame calculation operation of calculating a second moment of inertia, a moment of inertia of the second cross-section, and a battery frame storage operation of storing the second cross-section, a calculation value of the second moment of inertia, and one end of the second beam element being set to be connected to the second cross-section.

The battery frame setting operation may further include a front frame setting operation in which a battery front frame disposed in the width direction of the vehicle and located in the first area may be input as a beam element and stored as a third beam element, and the third beam element may be set at a position of the battery front frame, and a third moment of inertia may be calculated with any cross-section of the battery front frame in the longitudinal direction of the vehicle and stored.

The simplification information may include a center of gravity and mass of the second area.

The collision in the analyzing the vehicle collision model may be a frontal collision, and the first area may include a portion of a battery frame.

The first area may include a front bumper, a front subframe, and a front side member of the vehicle.

### Advantageous Effects of Invention

The present disclosure may analyze a collision model with high accuracy and simulation targeting the entire vehicle through the above structure.

In addition, the simulation may be analyzed in a short time.

In addition, a front collision analysis component for protecting an electric vehicle battery may be more efficiently developed, and there is an effect of enabling the parts manufacturers to conduct collision analysis themselves in addition to the automobile manufacturers.

### Brief Description of Drawings

FIG. 1 is a flowchart of a method for analyzing a vehicle collision model according to an embodiment of the present disclosure.
FIG. 2 is a configuration diagram of a device for performing a method for analyzing a vehicle collision model according to an embodiment of the present disclosure.
FIG. 3 illustrates a first area and a second area according to an embodiment of the present disclosure.
FIG. 4 illustrates a state of storage in a storage unit before an analysis operation of a method for analyzing a vehicle collision model according to an embodiment of the present disclosure.
FIG. 5 illustrates a position and shape of a first cross-section according to an embodiment of the present disclosure, and illustrates cross-sections of (a) a front pillar (A-pillar), (b) a rocker, and (c) a longitudinal floor.
FIG. 6 illustrates a cross-section and a shape thereof set in a battery frame setting operation according to an embodiment of the present disclosure. (a) and (b) are second cross sections, (a) shows a cross section of a battery side frame, (b) shows a cross section of a battery lower longitudinal frame, and (c) is a third cross section, showing a cross section of a battery front frame.

### Best Mode for Invention

Hereinafter, detailed embodiments of the present disclosure will be described with reference to the attached drawings. However, the idea of the present disclosure is not limited to the presented embodiments, and those skilled in the art who understand the idea of the present disclosure may easily propose other backward inventions or other embodiments included within the scope of the idea of the present disclosure by adding, changing, deleting or the like other components within the scope of the same idea, but this is also included within the scope of the idea of the present disclosure.

In addition, in describing the present disclosure, '- part' or 'unit' may be implemented in various manners, for example, by a processor, program instructions executed by a processor, a software module, a microcode, a computer program product, a logic circuit, an application-specific integrated circuit, firmware, or the like.

The content of the method disclosed in the embodiment of the present application may be directly implemented by a hardware processor, or may be implemented and completed by a combination of hardware and software modules among the processors. The software module may be stored in a storage medium of the related art such as a random access memory, a flash memory, a read-only memory, a programmable read-only memory, an electrically erasable programmable memory, a register, or the like. The storage medium is located in the memory, and the processor reads the information stored in the memory, and combines the same with the hardware to complete the content of the above-described method. To avoid duplication, a detailed description is omitted herein.

In the implementation process, each content of the above-described method may be completed by a hardware logic integrated circuit or an instruction in the form of software, in the processor. The content of the method disclosed in the embodiment of the present application may be directly implemented by a hardware processor, or may be implemented and performed by a combination of hardware and software modules of the processor. The software module may be stored in a storage medium of the related art such as a random access memory, a flash memory, a read-only memory, a programmable read-only memory, an electrically erasable programmable memory, a register, or the like. The storage medium is located in the memory, and the processor reads the information stored in the memory, and combines the same with the hardware to complete the content of the above-described method.

For example, those skilled in the art will understand that each illustrative unit and algorithm operation described in the embodiment disclosed in this specification may be realized by combining electronic hardware or a combination of computer software and electronic hardware. Whether these functions are performed in hardware or software is determined by the specific application and design constraints of the technical solution. Those skilled in the art may realize the described functions in different ways for respective specific applications, but such realization should not be considered outside the scope of the present application.

In some embodiments provided in the present application, it should be understood that the disclosed devices and methods may be implemented in other manners. For example, the device embodiments described above are merely illustrative, and for example, the division of the units is merely a kind of logical functional division, and other division methods may exist in actual implementations. For example, multiple units or assemblies may be combined with or integrated into another system, or some features may be ignored or not performed. On the other hand, the coupling or direct coupling or communication connection between each other illustrated or discussed may be an indirect coupling or communication connection through some interface, device or unit, and may be electrical, mechanical or other forms.

The units described above as separate components may be physically separate, and the components indicated as units may or may not be physical units, and for example, may be located in one place or distributed over multiple network units. Some or all of the units may be selected according to actual needs to realize the purpose of the method of the present embodiment.

For example, each functional unit in each embodiment of the present application may be integrated into one processing unit, and each unit may exist alone, or two or more units may be integrated into one unit.

If the function above is implemented in the form of a software functional unit and sold or used as an independent product, the function may be stored in one computer-readable storage medium. Based on this understanding, in the technical solution of the present application, the part essentially or contributed to the prior art or a part of the technical solution may be implemented in the form of a software product, and the computer software product is stored in one storage medium, and enables a single computing device (which may be a personal computer, a server, or a network device, or the like) to perform all or part of the operations of the method described in each embodiment of the present application, including a few instructions. The storage medium described above includes various media capable of storing program code, such as USB memory, mobile hard disk, read-only memory (ROM), random access memory (RAM), magnetic disk, CD-ROM, or the like.

Computer aided engineering (CAE) has been used to support engineers in many tasks. For example, in structural or product design procedures, CAE analysis, especially finite element analysis (FEA), has often been used to evaluate responses (for example, stresses, displacements, and the like) under various loading conditions (for example, static or dynamic conditions).

The present disclosure relates to a vehicle collision analysis technique that is mainly applied in the design of key front-end crash components of a vehicle based on changes in vehicle component design characteristics for protecting high-capacity batteries adopted for long-distance driving of existing internal combustion engine vehicles and eco-friendly vehicles, especially electric vehicles.

It is to provide an analysis method in which design efficiency increases by simplifying peripheral parts that effectively reflect detailed modeling of key front-end collision-related parts and vehicle behavior characteristics for the existing high-cost, low-efficiency modeling of the entire vehicle, and in which various approaches are possible in the early stage of design without overall vehicle information.

The present disclosure relates to a method for analyzing a vehicle collision model based on finite element analysis using software through an electronic device such as a computer or the like, and the following content shows that it is operated by a mechanical device.

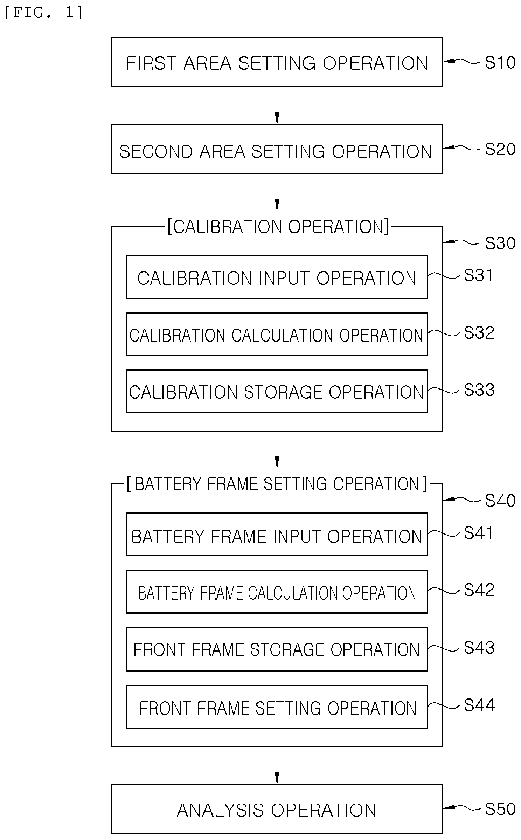

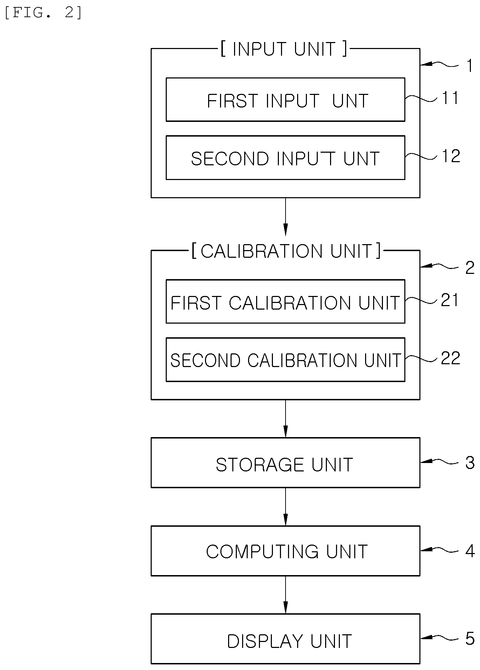

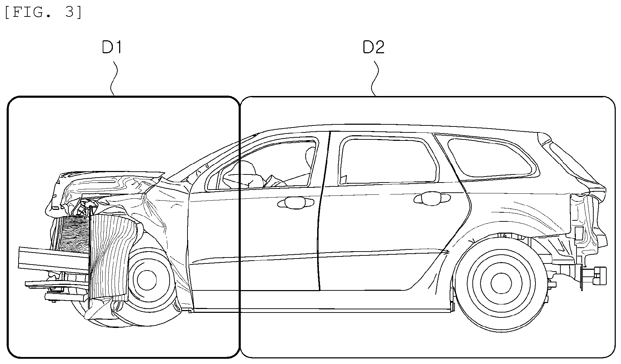

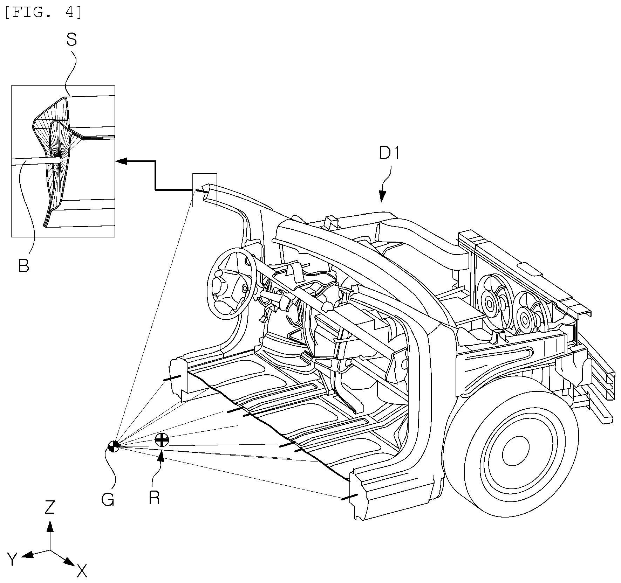

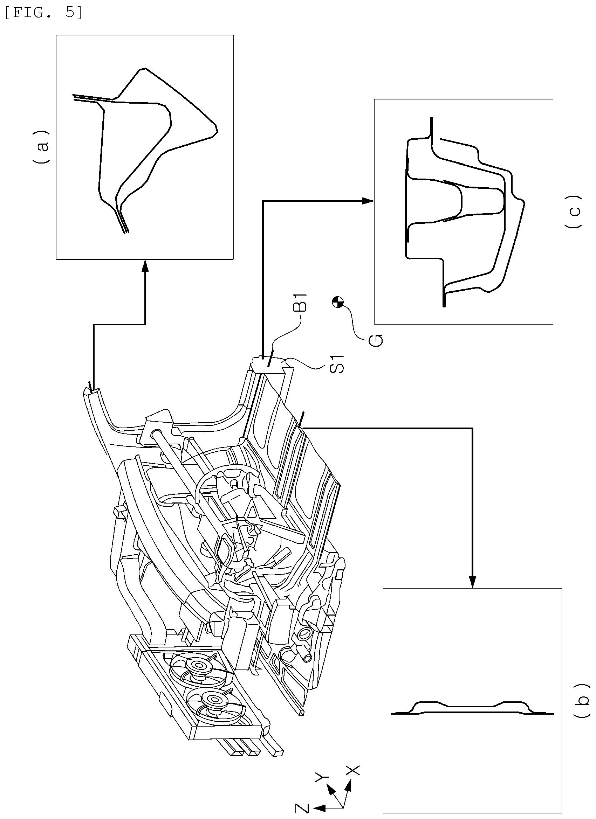

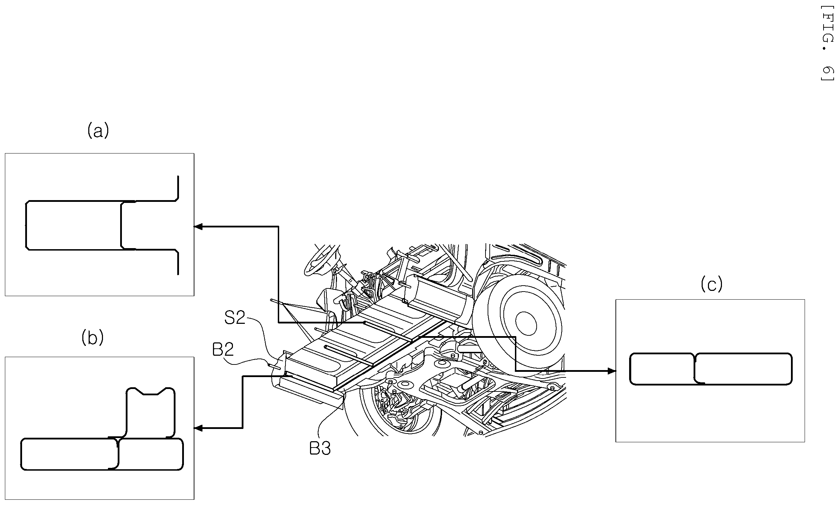

FIG. 1 briefly illustrates a method according to an embodiment of the present disclosure, and FIG. 2 illustrates a configuration formed according to an embodiment of the present disclosure. FIG. 3 illustrates a first area and a second area, FIG. 4 illustrates a simplified second area according to an embodiment of the present disclosure, FIG. 5 illustrates a shape of a first cross-section (S1) designated in a calibration operation, and FIG. 6 illustrates a shape of a second cross-section (S2) and a third cross-section in a battery frame setting operation.

A method for analyzing a vehicle collision model according to an embodiment of the present disclosure includes a first area setting operation (S10), a second area setting operation (S20), a calibration operation (S30), and an analysis operation (S50).

Basic information is input to an input unit (1), and the area may be designated based on whether or not the deformation is large due to the collision based on the overall shape of the vehicle. In addition, the part with a large area may use detailed modeling as is, and for parts where deformation is relatively small and may be considered almost non-existent, it may be simplified and stored in a storage unit (3).

The first area setting operation (S10) defines a first area (D1), which is the area in which deformation occurs due to the collision, in a first input unit (11), and the modeling for the first area (D1) may be input and stored in the storage unit (3). The first area (D1) may receive the modeling in which all the configurations are illustrated in detail as it is. Information input to the outside may also be retrieved by the first input unit (11). The first area (D1) may be stored as a rigid body element as the shape and information of the input modeling.

The second area setting operation (S20) defines a second area (D2) that is relatively less deformed by collision in a second input unit (12), and the second area (D2) is designated as a rigid body element, and simplification information for the rigid body element is received and stored in the storage unit (3).

For example, the simplification information may include the center of gravity (G) and mass of the second area (D2).

The second area (D2) is an area that is relatively less deformed by the collision. The second area (D2) may be input as a rigid body element or may be automatically set by the second input unit (12). And, simplification information may be received. The center of gravity (G) and mass for the second area (D2) may be defined, and the second area (D2) may be stored in the storage unit (3) as a rigid body element having a corresponding mass at the center of gravity (G), rather than being modeled.

The first area (D1) and the second area (D2) may be combined to become the entire vehicle model area, and the criteria for the first area (D1) and the second area (D2) may be automatically set by basic data previously set by experience or experiment. Alternatively, they may be directly input by the experimenter.

For example, when the modeling of the entire vehicle is input, a computing unit (4) automatically calculates the mass moment of inertia to reflect the behavioral characteristics of the entire vehicle, and the mass moment of inertia of the second area (D2) may be automatically modified by considering the mass moment of inertia of the entire vehicle.

By dividing into the first area (D1) and the second area (D2) and simplifying the second area (D2) as a rigid body element, the analysis model may be simplified and the analysis may be performed.

When performing the analysis with the simplified model, an error occurs compared to performing the analysis with the actual modeling composed of the entire body. Therefore, to correct this error, a beam element (B) is set in some areas, and the mass moment of inertia of the section (S) where the beam element (B) is set is considered.

In the calibration operation (S30), a first beam element (B1) is designated at the boundary between the first area (D1) and the second area (D2), and one end of the first beam element (B1) may be connected to the modeling and the other end thereof may be connected to the rigid body element, and stored.

The calibration operation (S30) is an operation of performing a correction for considering the micro deformation amount due to elasticity and some plasticity in the collision analysis of the simplified second area (D2). For example, the micro deformation amount is considered by considering the actual center of gravity (R) for the entire modeling.

In the calibration unit (2), to consider the micro deformation amount, the first beam element (B1) is automatically designated or set, and one end of the first beam element (B1) may be configured to be connected to the modeling and the other end may be configured to be connected to the rigid body element. The execution of the calibration unit (2) as described above may be stored in the calibration unit (2) at the same time as the execution. Alternatively, the contents of the execution of the calibration operation (S30) may be stored in the storage unit (3).

According to an embodiment of the present disclosure, the calibration operation (S30) may include a calibration input operation (S31), a calibration calculation operation (S32), and a calibration storage operation (S33).

The calibration input operation (S31) may receive a first cross-section (S1), which is a cross-section in the vehicle width direction, for a vehicle component designated as the first beam element (B1) and located at the boundary.

The calibration calculation operation (S32) may automatically calculate the first moment of inertia, which is the moment of inertia of the first cross-section (S1).

In the calibration storage operation (S33), one end of the first beam element (B1) may be connected to the first cross-section (S1) of the modeling, and the first moment of inertia may be stored as information of the first beam element (B1).

For example, the first cross-section (S1) may be a cross-section of a front pillar (A-pillar), a rocker (Rocker), and a longitudinal floor.

The first cross-section (S1) may be a section formed from the front of the vehicle and extending to the rear, and a cross-section of a component located at the boundary between the first area (D1) and the second area (D2) may be designated. Therefore, it may be a cross-section of the front pillar, rocker, and longitudinal floor, taken in the width direction of the vehicle, as described above. The cross-section itself may be designated, or when the location is designated, the cross-section may be automatically designated by the calibration unit (2).

However, it is not limited to the above components, and all components located at the boundary of the first area (D1) and the second area (D2) may be included.

By applying beam elements, the micro deformation of the simplified area may be expressed by all degrees of freedom, thereby providing an effect of increasing the accuracy of the overall vehicle collision behavior expression of the analysis model.

The analysis operation (S50) may automatically calculate the collision through the algorithm of finite element analysis using the values stored in the storage unit (3) and the calibration unit (2), in the computing unit (4).

For example, the collision of the collision model analysis may be a front collision.

The method according to an embodiment of the present disclosure may simplify and analyze all collisions, and the case of a front collision will be described below, but without being limited thereto.

In the case of a front collision, the first area (D1) may include the front bumper, front subframe, and front side member of the vehicle. The roles of the components due to a frontal collision may all be confirmed by including the front bumper, front subframe, front side member and the like, which are the components that absorb the most impact due to a frontal collision.

For example, a display unit (5) may be additionally provided so that the result value calculated by the computing unit (4) may be displayed through a device such as a display or the like.

For example, the first area (D1) may include a portion of the battery frame.

In this case, it may be reinforced with a beam element to reflect the micro-deformation characteristics of the battery frame for battery protection.

In the case in which a portion of the battery frame is included, a battery frame setting operation (S40) may be further included to individually simplify and compensate the battery frame.

For example, the battery frame setting operation (S40) is located between the second area setting operation (S20) and the calculation operation, and is set as a second beam element (B2) for the battery frame surrounding the battery area of the vehicle in the calibration unit (2), and one end of the second beam element (B2) may be connected to the modeling, and the other end may be connected to the rigid body element and stored.

For example, the battery frame setting operation (S40) may include a battery frame input operation (S41) for receiving a side frame forming a side surface of the battery frame and a second cross section (S2) which is a cross section of the battery longitudinal direction frame in the width direction, disposed in the longitudinal direction of the vehicle at the lower portion of the battery area, a battery frame calculation operation (S42) for calculating a second moment of inertia which is a moment of inertia of the second cross section (S2), and a battery frame storage operation (S43) for setting and storing the second cross section (S2), the calculation value of the second moment of inertia, and one end of the second beam element (B2) being connected to the second cross section (S2).

The second beam element (B2), like the first beam element (B1), may have one end connected to a detailed modeling area by a boundary between the first area (D1) and the second area (D2), and the other end connected to a rigid body element of the second area (D2).

In addition, the battery frame setting operation (S40) may further include a front frame setting operation (S44) in which a battery front frame disposed in the width direction of the vehicle and located in the first area (D1) is received as a beam element and stored as a third beam element (B3), the third beam element is set at the position of the front frame, and a third moment of inertia is calculated and stored with any cross-section of the front frame in a longitudinal direction of the vehicle.

Although, the front frame of the battery area may not be a configuration located at the boundary between the first area (D1) and the second area (D2). However, it may be simplified by additional conversion into a beam element.

In the case where the front frame is converted into the third beam element (B3), it may be applied as it was originally fixed at the corresponding position without being connected to a specific configuration of the second area (D2).

According to the present disclosure, the first area (D1), which is the design target area, may derive the exact collision deformation behavior and collision energy value identically to the entire vehicle analysis model through detailed modeling, and the second area (D2), which is the simplified area, may derive the collision behavior similar to the case of analyzing the entire vehicle modeling by simplifying as much as possible, but reinforcing with a beam element (B).

In addition, the effect of more efficiently improving the development of frontal collision analysis components for protecting electric vehicle batteries is provided.

The following is a table comparing the analysis of the entire vehicle model and the method for analyzing a vehicle collision model according to the present disclosure. Table 1 shows the result values by respective components for a full frontal collision test, Table 2 shows the result values for a partial frontal collision test, and Table 3 shows the result values for a small overlap collision test.

**[Table 1]**

| Assy. | Entire Modeling Max IE (KJ) | Simplified Modeling Max IE (KJ) | Simple/Full (%) |
|---|---|---|---|
| Front Side Member LH | 54.2 | 57.8 | 106.6 |
| Front Side Member RH | 54.0 | 55.5 | 102.8 |
| Shot Gun LH | 19.9 | 22.3 | 112.1 |
| Shot Gun RH | 20.6 | 23.2 | 112.6 |
| Front Bumper | 26.4 | 26.9 | 101.9 |
| Front Subframe | 63.1 | 65.1 | 103.2 |

**[Table 2]**

| Assy. | Entire Modeling Max IE (KJ) | Simplified Modeling Max IE (KJ) | Simple/Full(%) |
|---|---|---|---|
| Front Side Member LH | 74.5 | 73.1 | 98.1 |
| Shot Gun LH | 24.2 | 27.8 | 114.9 |
| Front Bumper | 25.3 | 26.4 | 104.3 |
| Front Subframe | 50.9 | 54.9 | 107.9 |

**[Table 3]**

| Assy. | Entire Modeling Max IE (KJ) | Simplified Modeling Max IE (KJ) | Simple/Full(%) |
|---|---|---|---|
| Front Side Member LH | 39.9 | 41.2 | 103.3 |
| Shot Gun LH | 46.5 | 54.1 | 116.3 |
| Front Bumper | 19.9 | 21 | 105.5 |
| Front Subframe | 17.6 | 19.1 | 108.5 |

The tables above show the results of testing the entire modeling in each test, mainly focusing on the energy-absorbing components, and the results according to an embodiment of the present disclosure. The results of the entire modeling are illustrated as the entire modeling, the result values obtained according to an embodiment of the present disclosure are illustrated as the simplified modeling, and the comparison of the two values is illustrated as Simple/Full. As illustrated above, it can be seen that the energy absorption values of the components that mainly absorb shock in all the tests are reliable results, within 10%.

In addition, it can be seen that in the case of a full frontal collision test that analyzes the collision with the entire modeling, the time consumption is significantly reduced from 21h 36m (100.0%) to 7h 22m (34.1%) according to an embodiment of the present disclosure, from 20h 49m (100.0%) to 7h 29m (35.9%) in the case of a partial frontal collision test, and from 21h 14m (100.0%) to 7h 17m (34.3%) in the case of a small overlap collision test, which is generally about 35% of the time consumption.

Although the present disclosure has been described above with reference to the embodiments, the present disclosure is not limited to the embodiments described above, and it is obvious that it may be modified and implemented by a person skilled in the art without changing the technical idea of the present disclosure claimed in the claims.

### (Description of Reference Characters)

| | |
|---|---|
| S10: FIRST AREA SETTING OPERATION | S20: SECOND AREA SETTING OPERATION |
| S30: CALIBRATION OPERATION | S40: BATTERY FRAME SETTING OPERATION |
| S50: ANALYSIS OPERATION | |
| 1: INPUT UNIT | 2: CALIBRATION UNIT |
| 3: STORAGE UNIT | 4: COMPUTING UNIT |
| 5: DISPLAY UNIT | |

=

## Claims

1. A method for analyzing a vehicle collision model based on finite element analysis using software, comprising:
a first area setting operation of defining a first area, an area in which deformation occurs due to a collision, in a first input unit, and receiving a modeling of the first area and storing the modeling in a storage unit;
a second area setting operation of defining a second area, an area in which deformation occurs relatively less due to a collision, in a second input unit, designating the second area as a rigid body element, receiving simplification information about the rigid body element, and storing the simplification information in the storage unit;
a calibration operation of designating a first beam element at a boundary between the first area and the second area in a calibration unit, and connecting one end of the first beam element to the modeling and the other end thereof to the rigid body element and storing; and
an analysis operation of automatically calculating, by a computing unit, the collision using a finite element analysis algorithm with values stored in the storage unit and the calibration unit.

2. The method for analyzing a vehicle collision model of claim 1, wherein the calibration operation includes a calibration input operation of receiving a first cross-section of a vehicle component designated as the first beam element and located at the boundary, in a width direction of a vehicle, a calibration calculation operation of automatically calculating a first moment of inertia, a moment of inertia of the first cross-section, and a calibration storage operation of connecting one end of the first beam element to the first cross-section of the modeling and storing the first moment of inertia as information of the first beam element.

3. The method for analyzing a vehicle collision model of claim 2, wherein the first cross-section is a cross-section of a front pillar (A-pillar), a rocker, and a longitudinal floor.

4. The method for analyzing a vehicle collision model of claim 3, further comprising,
a battery frame setting operation located between the second area setting operation and the calculation operation, the battery frame setting operation setting a battery frame surrounding a battery area of the vehicle as a second beam element in the calibration unit, and connecting one end of the second beam element to the modeling and the other end thereof to the rigid body element and storing.

5. The method for analyzing a vehicle collision model of claim 4, wherein the battery frame setting operation includes,
a battery frame input operation of receiving a second cross-section, a cross section in the width direction, of a side frame forming a side surface of the battery frame and a battery longitudinal frame disposed in a longitudinal direction of the vehicle in a lower portion of the battery area,
a battery frame calculation operation of calculating a second moment of inertia, a moment of inertia of the second cross-section, and
a battery frame storage operation of storing the second cross-section, a calculation value of the second moment of inertia, and one end of the second beam element being set to be connected to the second cross-section.

6. The method for analyzing a vehicle collision model of claim 5, wherein the battery frame setting operation further includes a front frame setting operation in which,
a battery front frame disposed in the width direction of the vehicle and located in the first area is input as a beam element and stored as a third beam element, and
the third beam element is set at a position of the battery front frame, and a third moment of inertia is calculated with any cross-section of the battery front frame in the longitudinal direction of the vehicle and stored.

7. The method for analyzing a vehicle collision model of claim 1, wherein the simplification information includes a center of gravity and mass of the second area.

8. The method for analyzing a vehicle collision model of claim 1, wherein the collision in the analyzing the vehicle collision model is a frontal collision, and
the first area includes a portion of a battery frame.

9. The method for analyzing a vehicle collision model of claim 8, wherein the first area includes a front bumper, a front subframe, and a front side member of the vehicle.
